Europäisches Patentamt

European Patent Office

Office européen des brevets

(19)

(11) Publication number: **0 193 262**
**B1**

(12) **EUROPEAN PATENT SPECIFICATION**

(45) Date of publication of patent specification: **30.08.89**

(51) Int. Cl.⁴: **C 08 F 10/02, C 08 F 2/42**

(21) Application number: **86300341.4**

(22) Date of filing: **20.01.86**

(54) Deactivation of catalyst in solution process for polymerization of alpha-olefins.

(30) Priority: **28.01.85 GB 8502066**

(43) Date of publication of application:
**03.09.86 Bulletin 86/36**

(45) Publication of the grant of the patent:
**30.08.89 Bulletin 89/35**

(84) Designated Contracting States:
**AT BE DE FR GB IT NL SE**

(56) References cited:
**EP-A-0 062 127**
**EP-A-0 067 645**
**DE-A-3 305 782**

(73) Proprietor: **DU PONT CANADA INC.**
**Box 2200 Streetsville Postal Station**
**Mississauga Ontario L5M 2H3 (CA)**

(72) Inventor: **Zboril, Vaclav George**
**613 Pimlico Place**
**Kingston Ontario, K7M 5T7 (CA)**

(74) Representative: **Ellis, John Clifford Holgate et al**
**MEWBURN ELLIS & CO. 2/3 Cursitor Street**
**London EC4A 1BQ (GB)**

Courier Press, Leamington Spa, England.

**Description**

The present invention relates to a process for the polymerization of alpha-olefins and especially to the deactivation of the polymerization catalyst in a solution process for the polymerization of alpha-olefins, especially ethylene or mixtures of ethylene and higher alpha-olefins. In particular the present invention relates to such deactivation in a process in which deactivated catalyst is not separated from the polymer.

Polymers of ethylene, for example, homopolymers of ethylene and copolymers of ethylene and higher alpha-olefins, are used in large volumes for a wide variety of end uses, for example, in the form of film, fibres, moulded or theremoformed articles, pipe, coatings and the like.

Processes for the preparation of homopolymers of ethylene and copolymers of ethylene and higher alpha-olefins are known. Such processes include processes in which the monomers are polymerized in the presence of a coordination catalyst, for example, a catalyst comprising a compound of a transition metal belonging to Groups IVB—VIB of the Periodic Table and an organometallic compound of a metal belonging to Groups I—IIIIA of the Periodic Table.

A particularly preferred process for the polymerization of alpha-olefins is the high temperature or "solution" polymerization process, an example of which is described in Canadian Patent 660 869 of A. W. Anderson, E. L. Fallwell and J. M. Bruce, which issued 1963 April 9. In a solution process the process parameters are selected in such a way that both the monomer and polymer are soluble in the reaction medium. Under such conditions accurate control over the degree of polymerization, and hence the molecular weight of the polymer obtained, may be achieved, for example, by control of the reaction temperature. Solution processes are also disclosed in Canadian Patents 1 171 065 of V. G. Zboril, M. A. Hamilton and R. W. Rees and 1 171 066 of V. G. Zboril and M. A. Hamilton, both issued 1984 July 17, and Canadian Patent No. 1 220 189 of M. A. Hamilton, D. A. Harbourne, C. G. Russell, V. G. Zboril and R. Mulhaupt, issued 1987 April 7.

The polymerization reaction in a solution polymerization process is normally terminated by addition of a so-called "deactivator". A wide variety of compounds are capable of deactivating the coordination catalyst, especially at the high temperatures used in a solution polymerization process. However, a deactivator must meet other, more stringent, criteria in order to be acceptable for use in a commercial process. For instance, if a so-called catalyst removal process is used, both the deactivated catalyst residues and the deactivator must be capable of being removed from the reaction mixture in such a removal process. If the deactivated catalyst remains in the polymer, the deactivator and deactivated catalyst residues must not cause problems in the separation of polymer from solvent and unreacted monomers, in the processing of the polymer obtained and in the resultant fabricated articles. In any event, the polymer must have commercially-acceptable colour, odour and toxicity properties. It is particularly difficult to assess the possible effects of a potential deactivator at the high temperatures of a solution process, especially with regard to isomerization of comonomers, degradation of the deactivator, generation of coloured species, reaction with antioxidants and other stabilizers and the like. Moreover, the behavior of the deactivator may be quite sensitive to changes in the operation of a solution process.

Deactivators for solution polymerization processes are known, for example, a fatty acid or an alcohol. The fatty acid is admixed with hydrocarbon solvent, normally the solvent of the polymerization process, and fed into the polymerization mixture, usually shortly after that mixture passes from the reactor. The polymerization mixture that has been treated with deactivator contains catalyst residues which may be removed by contacting the mixture with an adsorbent, for example, alumina. Such a deactivation and catalyst removal process is described in Canadian Patent 732 279 of B. B. Baker, K. M. Brauner and A. N. Oemler, which issued 1966 April 12. The use of organosilicon compounds of the formula $(RO)_nSiR'_{4-n}$ where R is a $C_{1-20}$ alkyl groups, R' is H or a $C_{1-20}$ hydrocarbon and n = 1—4 as deactivating agents is described in Japanese Patent Application No. 59/74 105 of Asahi Chemical Industry, published 1984 April 26.

Coordination catalysts containing vanadium may conveniently be deactivated by contacting the polymerization mixture with a solution of a salt of an alkaline earth metal or zinc and an aliphatic monocarboxylic acid dissolved in the hydrocarbon solvent used in the polymerization process. Such deactivation of coordination catalysts containing vanadium tends to result in polymer of improved colour, as is disclosed in Canadian Patent 1 165 499 of V. G. Zboril, which issued 1984 April 10. Titanium-based coordination catalysts used in a solution polymerization process may be deactivated to give polymer of improved colour by sequentially contacting the polymerization mixture with a minor amount of water and then with a solution of a salt of an alkaline earth metal or zinc and a monocarboxylic acid dissolved in a hydrocarbon solvent, preferably the solvent used in the polymerization process, as disclosed in EP—A—0067645 (inventors M. A. Hamilton, D. A. Harbourne and V. G. Zboril). Coordination catalysts may also be deactivated by sequentially contacting the polymerization mixture with a nitrogenous base, optionally in the form of an aqueous solution, carbon dioxide, carbon monoxide, dialkyl carbonate or dioxolones, and then a solution of a salt of an alkaline earth metal or zinc and aliphatic monocarboxylic acid dissolved in a hydrocarbon solvent, as is disclosed in EP—A—193261 (inventors D. J. Mitchell and V. G. Zboril) and EP—A—193263 (inventors V. G. Zboril and R. A. Zelonka).

Different considerations apply where other polymerization methods are used. DE—A—3 305 782, which is concerned with high pressure polymerization and copolymerization of ethylene without the use of a hydrocarbon solvent, seeks to avoid the use of salt solutions, because the hydrocarbon solvent used for dissolving the salt gives rise to technical difficulties in that polymerization method. Instead of a salt solution, therefore, DE—A—3 305 782 suggests the use of an activator in the form of a gas, mentioning for this purpose gases chosen from oxygen, water, ether, alcohols, carboxylic acids, esters, aldehydes, ketones, carbon monoxide, carbon dioxide, ammonia, amines, nitrogen monoxide, hydrogen sulphide, sulphides and sulphoxides. Carbon dioxide is preferred.

It has now been found that the colour of the polymer obtained may be improved if the deactivated polymerization mixture is contacted with an organosilicon compound in addition to a solution of a salt of an alkaline earth metal or zinc and aliphatic monocarboxylic acid dissolved in a hydocarbon solvent.

Accordingly the present invention provides a solution polymerization process for the preparation of high molecular weight polymers of alpha-olefins selected from the group consisting of homopolymers of ethylene and copolymers of ethylene and $C_3$—$C_{12}$ higher alpha-olefins, said process comprising feeding monomer selected from the group consisting of ethylene and mixtures of ethylene and at least one $C_3$—$C_{12}$ higher alpha-olefin, a coordination catalyst and inert hydrocarbon solvent to a reactor, said catalyst being a titanium-based and/or vanadium-based coordination catalyst, polymerizing said monomer at a temperature of up to 320°C and a pressure of less than 25 MPa, deactivating the catalyst in the solution so obtained by sequentially admixing therewith (a a minor amount of a deactivating agent selected from the group consisting of water, a nitrogeneous base, carbon dioxide, carbon monoxide, dimethyl carbonate, and mixtures thereof, followed by (b) a solution of a salt of an alkaline earth metal or zinc and aliphatic monocarboxylic acid dissolved in hydrocarbon solvent, and (c) an organosilicon compound, said nitrogenous base being of the formula $NR^1R^2R^3$, where $R^1$, $R^2$ and $R^3$ are independently selected from the group consisting of H, saturated alkyls having 1—20 carbon atoms and —$SiR^4R^5R^6$ where each of $R^4$, $R^5$ and $R^6$ is independently selected from saturated alkyls having 1—20 carbon atoms, with the proviso that the nitrogenous base does not contain more than two —$SiR^4R^5R^6$ groups, said organosilicon compound being of the formula $SiR'_n(OR'')_{4-n}$, where $R'$ and $R''$ are independently selected from the group consisting of alkyl and cycloalkyl having 1—20 carbon atoms, and $n = 0$—3, separating the hydrocarbon solvent and other volatile matter from the resultant solution and recovering a composition comprising said high molecular weight polymer, the amount of the deactivating agent (a) being not more than 2.5 moles of deactivating agent per mole of halogen plus alkyl radicals in the coordination catalyst.

In a preferred embodiment of the process of the present invention, the nitrogenous base is an aqueous solution of the nitrogenous base and the amount of nitrogenous base plus water is less than 2.5 moles per mole of halogen plus alkyl radicals in the coordination catalyst.

In a further embodiment, the R'' group of the organosilicon compound is methyl or ethyl.

In a still further embodiment, the organosilicon compound of step (c) is admixed with and added with the solution of step (b).

In another embodiment of the process of the present invention, the carboxylic acid is a $C_8$—$C_{10}$ carboxylic acid and the alkaline earth metal is calcium.

The present invention is directed to a solution polymerization process for the preparation of high molecular weight polymers of alpha-olefins. In particular the polymers of alpha-olefins are homopolymers of ethylene or copolymers of ethylene and higher alpha-olefins, especially such higher alpha-olefins having 3 to 12 carbon atoms i.e. $C_3$—$C_{12}$, and especially $C_4$—$C_{12}$, alpha-olefins, including bicyclic alpha-olefins, examples of which are propylene, butene-1, hexene-1, octene-1 and bicyclo-(2,2,1)2-heptene. In addition cyclic endomethylenic dienes may be fed to the process with the ethylene or mixtures of ethylene and $C_3$—$C_{12}$ alpha-olefin, as is described in Canadian Patent 980 498 of C. T. Elston, which issued 1975 December 23.

In a solution polymerization process of the present invention monomer, a coordination catalyst and inert hydrocarbon solvent are fed to a reactor. Coordination catalysts for solution polymerization processes are known, for example those described in the aforementioned Canadian Patents 660 869, 1 171 065 and 1 171 066, in Canadian Patent 1 119 154 of A. N. Mollison and V. G. Zboril, which issued 1982 March 2 and in the aforementioned Canadian Patent No. 1 220 189. Such coordination catalysts may be titanium-based and/or vanadium based catalysts, especially titanium-based or titanium/vanadium-based catalysts in which 20—100% of the transition metal is titanium. The monomer is ethylene or a mixture of ethylene and one or more of the higher alpha-olefins.

Solution polymerization processes may be operated at temperatures of up to 320°C and especially in the range 105—310°C, the lower temperature being above the lowest solubilization temperature of the polymer, as will be understood by those skilled in the art of solution polymerization processes. The pressures used in the process of the present invention are those known for solution polymerization processes viz. less than 25 MPa and especially in the range of about 4—25 MPa. The pressure and temperature are controlled so that both the unreacted monomers and the polymers formed remain in solution.

The hydrocarbon solvent used in the polymerization process is a hydrocarbon solvent that is inert with respect to the coordination catalyst. Such solvents are known and include hexane, heptane, octane, cyclohexane, methylcyclohexane and hydrogenated naphtha. The solvent used in the polymerization process is preferably also used in the preparation of the coordination catalyst. The hydrocarbon solvent is the major component of the polymerization mixture fed to the reactor, usually comprising at least 60% by

3

weight of the reaction mixture. In the process the monomer is dissolved in the solvent.

The mixture that exits from the polymerization reactor comprises polymer, unreacted monomers, coordination catalyst some of which remains in an active state, and hydrocarbon solvent. A deactivator is added to the mixture to terminate the polymerization process. In the process of the present invention the mixture passing from the polymerization reactor is treated in three steps, although in an embodiment two of those steps are combined as one step.

In the first step, a deactivating agent is added to the mixture passing from the reactor. The deactivating agent may be a minor amount of water or of a nitrogenous base. The nitrogenous base is of the formula $NR^1R^2R^3$ where $R^1$, $R^2$ and $R^3$ are independently selected from the group consisting of H, saturated alkyls having 1—20 carbon atoms and —$SiR^4R^5R^6$ where each of $R^4$, $R^5$ and $R^5$ is independently selected from saturated alkyle having 1—20 carbon atoms, with the proviso that the nitrogenous base does not contain more than two —$SiR^4R^5R^6$ groups. Preferably, each of $R^1$, $R^2$ and $R^3$ is H i.e. the nitrogenous base is ammonia. In a preferred embodiment, the nitrogenous base is in the form of an aqueous solution in which the ratio of water to nitrogenous base is not greater than 5. In embodiments, at least one of $R^1$, $R^2$ and $R^3$ is methyl or ethyl. Alternatively, the deactivator may be carbon dioxide, carbon monoxide or dimethyl carbonate. Mixtures of deactivators may be used.

The amount of deactivating agent added is not more than 2.5 moles of deactivating agent per mole of halogen plus alkyl radicals in the coordination catalyst. Preferably 0.25—1.5 moles are added per mole of halogen plus alkyl radicals in the catalyst.

In the second step the deactivator is a solution of a salt of an alkaline earth metal or zinc and an aliphatic monocarboxylic acid dissolved in hydrocarbon solent, especially a non-stoichiometric salt having excess acid to facilitate solubility. In particular the hydrocarbon solvent used for the deactivator is the same as the solvent used in the polymerization process. If a different solvent is used, it must be compatible with the solvent used in the polymerization process, not cause precipitation of any component of the polymerization mixture and not cause adverse effects on the solvent recovery system associated with the polymerization process.

The salt of the second deactivator solution must be dissolved in the solvent in order to obtain intimate contact between the deactivator and the product of reaction of catalyst with the first deactivator, and to obtain uniform dispersion of the deactivator and catalyst residues i.e. the form of the catalyst after deactivation, throughout the polymer, thereby facilitating the production of polymer of uniform properties.

In the salt of the deactivator solution, the metal is an alkaline earth metal or zinc, especially magnesium or calcium. The remainder of the salt is derived from at least one aliphatic carboxylic acid, especially such as acid having 6 to 20 carbon atoms. In a preferred embodiment the acid has 8 to 12 carbon atoms. The acid is preferably a branched chain aliphatic acid although straight chain aliphatic acids and cycloaliphatic acids may be used. Moreover, the acids may be saturated or unsaturated acids. However, the acid must be such that the salt thereof that is used in the process of the present invention is soluble in the hydrocarbon solvent used therein. In preferred embodiments the salt is calcium 2-ethyl hexanoate, calcium naphthenate, calcium iso-stearate or the like.

In the third step, the agent added is an organo-silicon compound of the formula $SiR'_n(OR'')_{4-n}$ where R' and R'' are each independently selected from the group consisting of alkyl or cycloalkyl having 1—20 carbon atoms. Preferably R'' is methyl or ethyl. In preferred embodiments n is 0 or 1. The organosilicon compound is intended to act as an agent that improves the colour of the polymer subsequently obtained, rather than as a deactivating agent. The addition of the solution of the salt of the carboxylic acid of the second step and the addition of the organosilicon compound of the third step may be combined as a single step. However, the organosilicon compound should not be added as part of the deactivating agent of the first step, especially because such addition may result in isomerization of the higher alpha-olefin and/or polymer of poor colour.

The ratio of the amount of organosilicon compound to the amount of the salt of the carboxylic acid should preferably not be greater than 2 (molar basis) and more preferably in the range 0.2—1.5.

In the process of the present invention the thus deactivated and treated polymerization mixture is fed to a separator, which may be a multistage separator, to separate unreacted monomer, hydrocarbon solvent and any other volatile matter from the polymer. In contrast to the usual practice in a solution process, no steps are taken to remove catalyst residues and/or the organosilicon compound from the polymer using adsorbent or other techniques. After separation from solvent and unreacted monomer, the polymer may be extruded into water and cut into pellets or other suitable comminuted shapes.

The recovered polymer may then be treated with saturated steam, optionally admixed with air, at atmospheric pressure to, for example, reduce the amount of volatile materials and improve polymer colour. The treatment may be carried out for about 1 to 16 hours, following which the polymer may be dried and cooled wiht a stream of air for 1 to 4 hours. Pigments, antioxidants and other additives may be added to the polymer either before or after the polymer is initially formed into pellets or other comminuted shapes.

The antioxidant incorporated into polymer obtained from the process of the present invention may, in embodiments, be a single antioxidant e.g., a hindered phenolic antioxidant, or a mixture of antioxidants e.g. a hindered phenolic antioxidant combined with a secondary antioxidant e.g. a phosphite. Both types of antioxidant are known in the art. For example, the ratio of phenolic antioxidant to secondary antioxidant

EP 0 193 262 B1

may be in the range 0.25:1 to 1:1 with the total amount of antioxidant being in the range of 400 to 2000 ppm.

The polymers produced by the process of the present invention are capable of being fabricated into a wide variety of articles, as is known for homopolymers of ethylene and copolymers of ethylene and higher alpha-olefins.

Unless otherwise noted, in the examples hereinafter the following procedures were used.

The reactor was a 95 ml (depth = 15.1 mm, diameter = 88.9 mm) pressure vessel fitted with a six-bladed agitator having a diameter of 66.7 mm, a heating jacket, pressure and temperature controllers, two feed lines and an outlet line. The feed lines were located adjacent to the tips of the agitator blades while the outlet line was adjacent to the centre of the agitator. The catalyst precursors and other ingredients were prepared as solutions in cyclohexane which had been purified by being passed through a silica gel bed, stripped with nitrogen and passed through another silica gel bed followed by beds of 4X molecular sieve and of alumina. The monomer(s) was metered directly into the reactor. The rates of feed of the first and second components of the catalyst were adjusted to produce the desired conditions in the reactor.

The reactor effluent was passed through 4.52 mm ID tubing heated to a temperature of 296°C prior to injection of the first deactivator. The hold-up time in the tubing was about 0.2 min. After injection of the first deactivator, the resultant stream was passed through a further length of 4.57 mm ID tubing, which was heated to 320°C, for a hold-up time of about 2.8 min. A second deactivation was then injected into the stream. The deactivated polymer stream thus obtained was maintained at 320°C for about 15 seconds and then flashed into the barrel of a ram extruder heated to about 220°C, the gaseous matter obtained being removed from the extruder. The molten polymer obtained was periodically extruded into a mould having a depth of 1 mm and a diameter of 40 mm and then rapidly cooled to ambient temperature. The plaques thus obtained were then stripped for eight hours with a mixture of saturated steam and air (7:1, by volume) at atmospheric pressure and then dried for 4 hours using air at 100°C. The colour of the plaques was then measured on a Hunter® L,a,b colourimeter, the measurement being on four plaques stacked in a holder having a black background.

The present invention is illustrated by the following examples. The solvent used in the examples was

Example I

The catalyst was prepared by in-line mixing of (i) a solution of titanium tetrachloride (0.5 mmoles/litre) and vanadium oxytrichloride (0.5 mmoles/litre) in cyclohexane with (ii) a solution of 1.9 mmoles/litre of diethylaluminum chloride in cyclohexane, the atomic ratio of aluminum to titanium plus vanadium being 1.67:1. After about 30 seconds, a stream of hot cyclohexane was injected into the catalyst mixture, the resultant stream having a temperature of 210°C. The stream was maintained at this temperature for one minute.

The catalyst obtained using the above procedure was fed into the reactor. The co-catalyst of triethyl dimethyl siloxalane was also fed to the reactor. The co-catalyst was used as a 4 mmole/litre solution in cyclohexane and the rate of feed to the reactor was the same as that of the solution of the transition metal mixture (i) above. The reactor effluent was treated as described herinbefore.

The first deactivator was carbo dioxide which was injected as a 40 mmole/litre solution in cyclohexane. The rate of injection was such that the molar ratio of carbon dioxide to chlorine plus alkyl radicals in the catalyst was 1.56:1. The second deactivator was a non-stoichiometric mixture of calcium caprylate.caprate injected as a 6 mmole/litre solution in cyclohexane, the ratio of calcium to chlorine plus alkyl radicals in the catalyst being 0.35:1.

Tetraethoxy silicate i.e. the organosilicon compound in which each R' and R'' is ethyl and n = 0, was admixed with the solution of calcium caprylate/caprate shortly before injection of the solution into the reactor effluent. Further details and the results obtained are given in Table I. The runs were made in the sequence shown in Table I, Run 3 being a comparative run.

TABLE I

| Run No. | Tetraethoxysilicate Ratio* | Colour | |
| --- | --- | --- | --- |
| | | L value | b value |
| 1 | 0.35 | 73.7 | −1.33 |
| 2 | 0.12 | 74.2 | −1.25 |
| 3 | 0 | 74.3 | −0.80 |
| 4 | 0.23 | 74.1 | −1.38 |

\* moles per mole of chlorine plus alkyl radicals of the catalyst.

The results of Table I indicate that polymer with a decreased yellow hue (yelowness), as measured by the "b" value, is obtained using a process of the present invention.

5

Example II

The procedure of Example I was repeated except that the first deactivator was an admixture of water and ammonia in cyclohexane, the molar ratio of water:ammonia being 1:2. The rate of injection of the first deactivator was such that the molar ratio of the admixture to chlorine plus alkyl radicals in the catalyst was 0.23:1. The procedure of Example I was also varied in that different ratios of calcium to chlorine plus alkyl radicals of the catalyst were used.

Further details and the results obtained are given in Table II. The runs were made in the sequence shown in Table II, Runs 5 and 8 are being comparative runs.

TABLE II

| Run No. | Second Deactivator | | Colour | |
| | Calcium Salt* | Tetraethoxy silicate* | L value | b value |
| --- | --- | --- | --- | --- |
| 5 | 0.16 | 0 | 75.3 | −1.66 |
| 6 | 0.16 | 0.16 | 75.2 | −1.93 |
| 7 | 0.16 | 0.33 | 75.3 | −1.93 |
| 8 | 0.049 | 0 | 75.3 | −1.52 |
| 9 | 0.049 | 0.049 | 74.9 | −1.77 |
| 10 | 0.049 | 0.097 | 73.9 | −2.00 |

\* moles per mole of chlorine plus alkyl radicals of the catalyst.

The results in Table II indicate that polymer with a decreased yellowness, as measured by the "b" value, is obtained using a process of the present invention.

**Claims**

1. A solution polymerization process for the preparation of high molecular weight polymers of alpha-olefins selected from the group consisting of homopolymers of ethylene and copolymers of ethylene and $C_3$—$C_{12}$ higher alpha-olefins, said process comprising feeding monomer selected from the group consisting of ethylene and mixtures of ethylene and at least one $C_2$—$C_{12}$ higher alpha-olefin, a coordination catalyst and inert hydrocarbon solvent to a reactor, said catalyst and inert hydrocarbon solvent to a reactor, said catalyst being a titanium-based and/or vanadium-based coordination catalyst, polymerizing said monomer at a temperature of up to 320°C and a pressure of less than 20 MPa, deactivating the catalyst in the solution so obtained by sequentially admixing therewith (a) a minor amount of a deactivating agent selected from the group consisting of water, a nitrogenous base, carbon dioxide, carbon monoxide, dimethyl carbonate, and mixtures thereof, followed by (b) a solution of a salt of an alkaline earth metal or zinc and aliphatic monocarboxylic acid dissolved in hydrocarbon solvent, and (c) an organosilicon compound, said nitrogenous base being of the formula $NR^1R^2R^3$, where $R^1$, $R^2$ and $R^3$ are independently selected from the group consisting of H, saturated alkyls having 1—20 carbon atoms and —$SiR^4R^5R^6$ where each of $R^4$, $R^5$ and $R^6$ is independently selected from saturated alkyls having 1—20 carbon atoms, with the proviso that the nitrogenous based does not contain more than two —$SiR^4R^5R^6$ groups, said organosilicon compound being of the formula $SiR'_n(OR'')_{4-n}$, where R' and R'' are independently selected from the group consisting of alkyl and cycloalkyl having 1—20 carbon atoms, and n = 0—3, separating the hydrocarbon solvent and other volatile matter from the resultant solution and recovering a composition comprising said high molecular weight polymer, the amount of the deactivating agent (a) being not more than 2.5 moles of deactivating agent per mole of halogen plus alkyl radicals in the coordination catalyst.

2. The process of Claim 1 in which the organosilicon compound of step (c) is admixed with and added with the solution of step (b).

3. The process of Claim 1 or 2, in which the deactivating agent of step (a) is water.

4. The process of Claim 1 or 2, in which the deactivating agent of step (a) is nitrogenous base.

5. The process of Claim 1 or 2, in which the deactivating agent of step (a) is selected from the group consisting of carbon dioxide, carbon monoxide, and dimethyl carbonate.

6. The process according to any preceding claim in which n is 0 or 1.

7. The process according to any preceding claim in which R'' is methy or ethyl.

8. The process according to any preceding claim in which any alkyl group is methyl or ethyl.

9. The process according to any preceding claim in which the organosilicon compound is tetraethoxy-silicate, the organosilicon compound in which R'' is ethyl and n = 0.

10. The process according to any preceding claim in which the olymerization temperature is in the range 105—310°C.

11. The process according to any preceding claim in which the coordination catalyst is based on both titanium and vanadium.

12. The process according to any preceding claim in which the aliphatic monocarboxylic acid of the second deactivator has 6 to 20 carbon atoms.

13. The process of Claim 12 in which the aliphatic monocarboxylic acid of the second deactivator has 8 to 12 carbon atoms.

14. The process of any preceding claim in which the salt of the second deactivator is a calcium salt.

**Patentansprüche**

1. Lösungspolymerisationsverfahren zur Herstellung von Polymeren mit hohem Molekulargewicht von Alpha-Olefinen, die aus der Gruppe gewählt sind, die aus Homopolymeren von Äthylen und Copolymeren von Äthylen und $C_3$—$C_{12}$-höheren Alpha-Olefinen besteht, das genannte Verfahren umfassend das Einbringen eines Monomers, das aus der Gruppe gewählt ist, die aus Äthylen und Mischungen von Äthylen und wenigstens einem $C_3$—$C_{12}$-höheren Alpha-Olefin besteht, eines Koordinationskatalysators und eines inerten Kohlenwasserstofflösungsmittels in ein Reaktionsgefäß, wobei der genannte Katalysator ein Koordinationskatalysator auf Titan- und/oder Vanadiumbasis ist, polymerisieren des genannten Monomers bei einer Temperatur von bis zu 320°C und einem Druck von weniger als 25 MPa, Desaktivieren des Katalysators in der so erhaltenen Lösung durch aufeinanderfolgendes Mischen desselben mit (a) einer geringen Menge Desaktivierungsmittel, das aus der Gruppe gewählt ist, die aus Wasser, einer stickstoffhältigen Base, Kohlendioxid, Kohlenmonoxid, Dimethylcarbonat und Mischungen derselben besteht, gefolgt von (b) einer Lösung eines Salzes eines Erdalkalimetalls oder Zink und einer aliphatischen Monocarbonsäure, gelöst in einem Kohlenwasserstofflösungsmittel und (c) einer Organosiliziumverbindung, wobei die genannte stickstoffhältige Base die Formel $NR^1R^2R^3$ aufweist, worin $R^1$, $R^2$ und $R^3$ unabhängig voneinander aus der Gruppe gewählt sind, die aus H, gesättigten Alkylen mit 1—20 C-Atomen und —$SiR^4R^5R^6$ besteht, worin $R^4$, $R^5$ und $R^6$ jeweils unabhängig voneinander aus der Gruppe gewählt sind, die aus gesättigten Alkylen mit 1—20 C-Atomen besteht, mit der Maßgabe, daß die stickstoffhältige Base nicht mehr als zwei —$SiR^4R^5R^6$-Gruppen enthält, und die Organosiliziumverbindung die Formel $SiR'_n(OR'')_{4-n}$ aufweist, worin R' und R'' unabhängig voneinander aus der Gruppe gewählt sind, die aus Alkyl und Cycloalkyl mit 1—20 C-Atomen besteht und n für 0 bis 3 steht, Abtrennen des Kohlenwasserstofflösungsmittels und anderer flüchtiger Substanzen aus der entstandenen Lösung und Gewinnen einer Zusammensetzung, die das genannte Polymer von hohem Molekulargewicht enthält, wobei die Menge an Desaktivierungsmittel (a) nicht mehr als 2,5 Mol an Desaktivierungsmittel pro Mol Halogen plus Alkylreste im Koordinationskatalysator beträgt.

2. Verfahren nach Anspruch 1, in dem die Organosiliziumverbindung aus Schritt (c) der Lösung aus Schritt (b) zugegeben und mit dieser vermischt wird.

3. Verfahren nach Anspruch 1 oder 2, in dem das Desaktivierungsmittel aus Schritt (a) Wasser ist.

4. Verfahren nach Anspruch 1 oder 2, in dem das Desaktivierungsmittel aus Schritt (a) eine stickstoffhältige Base ist.

5. Verfahren nach Anspruch 1 oder 2, in dem das Desaktivierungsmittel aus Schritt (a) aus der Gruppe gewählt ist, die aus Kohlendioxid, Kohlenmonoxid und Dimethylcarbonat besteht.

6. Verfahren nach einem der vorhergehenden Ansprüche, worin n für 0 oder 1 steht.

7. Verfahren nach einem der vorhergehenden Ansprüche, worin R'' Methyl oder Äthyl bedeutet.

8. Verfahren nach einem der vorhergehenden Ansprüche, in dem jede Alkylgruppe Methyl oder Äthyl ist.

9. Verfahren nach einem der vorhergehenden Ansprüche, in dem die Organosiliziumverbindung Tetra-äthoxysilikat ist, die Organosiliziumverbindung, in der R'' Äthyl darstellt und n = 0 ist.

10. Verfahren nach einem der vorhergehenden Ansprüche, in dem die Polymerisationstemperatur innerhalb eines Bereiches von 105—310°C liegt.

11. Verfahren nach einem der vorhergehenden Ansprüche, in dem der Koordinationskatalysator ein solcher auf der Basis von sowohl Titan als auch Vanadium ist.

12. Verfahren nach einem der vorhergehenden Ansprüche, in dem die aliphatische Monocarbonsäure des zweiten Desaktivators eine solche mit 6—20 C-Atomen ist.

13. Verfahren nach Anspruch 12, in dem die aliphatische Monocarbonsäure des zweiten Desaktivators eine solche mit 8—12 C-Atomen ist.

14. Verfahren nach einem der vorhergehenden Ansprüche, in dem das Salz des zweiten Desaktivators ein Calciumsalz ist.

**Revendications**

1. Procédé de polymérisation en solution pour la préparation de polymères d'alpha-oléfines, de poids moléculaire élevé, choisis dans le groupe constitué d'homopolymères d'éthylène et de copolymères d'éthylène et d'alpha-oléfines supérieures en $C_3$—$C_{12}$, ledit procédé comprenant les étapes consistant à

7

amener un monomère choisi dans le groupe constitué de l'éthylène et de mélanges d'éthylène et d'au moins une alpha-oléfine supérieure en $C_3$—$C_{12}$, un catalyseur de coordination et un solvant hydrocarboné inerte dans un réacteur, ledit catalyseur étant un catalyseur de coordination à base de vanadium et/ou à base de titane, à polymériser ledit monomère à une température jusqu'à 320°C et une pression inférieure à 25 MPa, à désactiver le catalyseur dans la solution ainsi obtenue en mélangeant, de façon séquentielle, à celle-ci (a) une petite quantité d'un agent désactivant choisi dans le groupe constitué de l'eau, d'une base azotée, du dioxyde de carbone, du monoxyde de carbone, du diméthylcarbonate et leurs mélanges, suivi par (b) une solution d'un sel d'un métal alcalino-terreux ou de zinc et d'un acide monocarboxylique aliphatique dissous dans un solvant hydrocarboné, et (c) un composé organosilicié, ladite base azotée étant de formule $NR^1R^2R^3$, dans laquelle $R^1$, $R^2$ et $R^3$ sont indépendamment choisis dans le groupe constitué de H, des alkyles saturés ayant de 1 à 20 atomes de carbone, et —$SiR^4R^5R^6$, dans laquelle chacun des $R^4$, $R^5$ et $R^6$ est indépendamment choisi à partir d'alkyles saturés ayant de 1 à 20 atomes de carbone, à condition que la base azotée ne contient pas plus de deux groupes —$SiR^4R^5R^6$, ledit composé organosilicié ayant la formule $SIR'_n(OR'')_{4-n}$, dans laquelle R' et R'' sont indépendamment choisis dans le groupe constitué d'alkyles et de cycloalkyles ayant de 1 à 20 atomes de carbone, et n = 0—3, à séparer le solvant hydrocarboné et d'autres matières volatiles de la solution résultante et à récupérer une composition comprenant ledit polymère à poids moléculaire élevé, la quantité de l'agent de désactivation (a) n'étant pas supérieure à 2,5 moles d'agent désactivant per mole d'halogène plus les radicaux alkylés dans le catalyseur de coordination.

2. Procédé de la revendication 1, dans laquel le composé organosilicié de l'étape (c) est mélange et ajouté à la solution de l'étape (b).

3. Procédé des revendication 1 ou 2, dans lequel l'agent désactivant de l'étape (a) est de l'eau.

4. Procédé des revendications 1 ou 2, dans lequel l'agent désactivant de l'étape (a) est une base azotée.

5. Procédé des revendications 1 ou 2, dans lequel l'agent désactivant de l'étape (a) est choisi dans le groupe constitué du dioxyde de carbone, du monoxyde de carbone et du diméthylcarbonate.

6. Procédé selon l'une quelconque des revendications précédentes, dans lequel n est 0 ou 1.

7. Procédé selon l'une quelconque des revendications précédentes, dans lequel R'' est du méthyle ou de l'éthyle.

8. Procédé selon l'une quelconque des revendications précédentes, dans lequel chaque groupe alkylé est du méthyle ou de l'éthyle.

9. Procédé selon l'une quelconque des revendications précédentes, dans lequel le composé organosilicié est du tétraéthoxysilicate, le composé organosilicié dans lequel R'' est de l'éthyle et n = 0.

10. Procédé selon l'une quelconque des revendications précédentes, dans lequel la température de polymérisation est dans la plage de 105—310°C.

11. Procédé selon l'une quelconque des revendications précédentes, dans lequel le catalyseur de coordination est à base à la fois de titane et de vanadium.

12. Procédé selon l'une quelconque des revendications précédentes, dans lequel l'acide monocarboxylique aliphatique du second désactiveur présente de 6 à 20 atomes de carbone.

13. Procédé selon la revendication 12, dans lequel l'acide monocarboxylique aliphatique de second désactiveur présente de 8 à 12 atomes de carbone.

14. Procédé selon l'une quelconques des revendications précédentes, dans lequel le sel du second désactiveur est un sel de calcium.